# EUROPÄISCHE PATENTSCHRIFT

(11) **EP 4 217 619 B1**
(45) Veröffentlichungstag und Bekanntmachung des Hinweises auf die Patenterteilung: **29.05.2024**
(21) Anmeldenummer: 21734755.8
(22) Anmeldetag: 02.06.2021
(51) Int. Cl.: F16C 33/14, F16C 33/04, B23K 1/00, B23K 1/002, F16C 17/02, F16H 57/04, B23K 1/20

(54) **VERFAHREN ZUR HERSTELLUNG EINES BAUTEILES EINES GLEITLAGERS, SOWIE BAUTEIL, GLEITLAGER UND GETRIEBE EINER WINDKRAFTANLAGE**
METHOD FOR PRODUCING A COMPONENT OF A SLIDING BEARING, AND COMPONENT, SLIDING BEARING AND TRANSMISSION OF A WIND TURBINE
PROCÉDÉ DE PRODUCTION D'ÉLÉMENT DE PALIER LISSE, ET ÉLÉMENT, PALIER LISSE ET TRANSMISSION D'ÉOLIENNE

(30) Priorität: 25.09.2020 DE 102020125025
(43) Veröffentlichungstag der Anmeldung: 02.08.2023
(73) Patentinhaber: Schaeffler Technologies AG & Co. KG, 91074 Herzogenaurach (DE)
(72) Erfinder: PAUSCH, Michael, 97456 Dittelbrunn (DE); HENTSCHKE, Christoph, 97424 Schweinfurt (DE)
(86) Internationale Anmeldenummer: PCT/DE2021/100476
(87) Internationale Veröffentlichungsnummer: WO 2022/063356

(56) Entgegenhaltungen:
- EP-A1- 2 383 480
- EP-A1- 3 396 187
- EP-A1- 3 431 788
- DE-A1-102012 209 906
- DE-A1-102017 211 385
- JP-A- 2002 301 567

## Beschreibung

Die Erfindung betrifft ein Verfahren zur Herstellung eines Bauteiles eines Gleitlagers sowie ein derartiges Bauteil. Die Erfindung betrifft weiterhin ein Gleitlager umfassend ein solches Bauteil. Schließlich betrifft die Erfindung ein Getriebe einer Windkraftanlage umfassend mindestens ein solches Gleitlager.

Die EP 3 396 187 A1 beschreibt ein Verfahren zur Herstellung eines Bauteils eines Gleitlagers in Form einer Gleitlagerbüchse. Dabei wird eine ebene Stützmetallschicht bereitgestellt, darauf eine Gleitschicht angeordnet und der entstandene ebene Verbundwerkstoff derart eingerollt, dass die Stützschicht radial unterhalb der Gleitschicht angeordnet wird. Die Gleitlagerbüchse kann in einer Axialrichtung eine Schweißnaht aufweisen. Die Gleitlagerbüchse bildet, drehfest auf eine Achse aufgebracht, zusammen mit dieser Achse hier einen Planetenradzapfen zur Lagerung eines Planetenrades. Dabei wird die Gleitlagerbüchse vorzugsweise auf die Achse aufgeschrumpft. Das gebildete Gleitlager umfassend den Planetenradzapfen und das Planetenrad ist zur Verwendung in einem Windkraftanlagengetriebe geeignet.

Die DE 37 28 951 A1 offenbart eine gerollte Buchse für ein Gleitlager, die aus einem Bandabschnitt hergestellt wird. Eine im Bereich der zueinander zeigenden Enden des gerollten Bandabschnitts entstehende Stoßfuge wird durch ein Ladungsträgerstrahlschweißen geschlossen.

Gemäß DIN 1494 - 1 aus Juni 1983 sind Wandstärken derart gerollter Buchsen für Gleitlager im Bereich von 0,75 bis 2,5 mm üblich.

DE 10 2012 209906 A1 offenbart einen Trägerring, auf den ein Funktionsring aufgebracht wird. Der Funktionsring kann dabei auf den Trägerring geklebt oder gelötet werden. Trägerring und Funktionsring bestehen aus unterschiedlichen Werkstoffen.

DE 10 2017 211385 A1 offenbart ein Verfahren zur Herstellung einer Rollenlagerung, wobei eine Lagerhülse auf eine Nockenrolle aufgebracht wird. Anschließend wird an der Hülse mittels Umformung ein Axialbund ausgebildet.

JP 2002 301567 A beschreibt ein Verfahren zur Herstellung eines zylindrischen Verbundkörpers aus einem Kern und einer Hülse, wobei die Hülse auf den Metallkern gelötet wird und Lötflussmittel verwendet werden kann.

EP 3 431 788 A1 offenbart eine Bundlagerschale aus einem ersten Werkstoff und einem zweiten Werkstoff, der weicher ist als der erste Werkstoff und einen Überstand in Axialrichtung aufweist. Der Überstand ist so gebogen, dass ein Flansch ausgebildet wird, der sich an einen halbzylindrischen Lagerbereich anschließt. Zudem ist ein entsprechendes Herstellungsverfahren offenbart.

EP 2 383 480 A1 beschreibt ein Planetengetriebe für eine Windkraftanlage, aufweisend mehrere Radialgleitlager und Axialgleitlager.

Es ist Aufgabe der Erfindung, die Wandstärke der Gleitschicht eines Bauteiles eines Gleitlagers deutlich zu verringern und gleichzeitig die Kosten für die Ausbildung der Gleitschicht zu minimieren.

Die Aufgabe wird für ein Verfahren zur Herstellung eines Bauteiles eines Gleitlagers, umfassend folgende Schritte gelöst:
- Bereitstellen eines metallischen Bolzens mit einer zylindrischen Mantelfläche und zwei Stirnflächen,
- Beschichten der Mantelfläche des Bolzens mit einem Lötflussmittel oder einem Lotmaterial,
- Bereitstellen eines Metallbleches aus Bronze, Umformen des Metallbleches zu einer einen Längsschlitz aufweisenden, zylindrischen Hülse, wobei eine, eine Innenseite der Hülse bildende erste Seite des Metallbleches vor oder nach dem Umformen mit einem Lotmaterial beschichtet wird, wenn auf die Mantelfläche des Bolzens das Lötflussmittel aufgebracht ist, oder wobei die, eine Innenseite der Hülse bildende erste Seite des Metallbleches vor oder nach dem Umformen mit einem Lötflussmittel beschichtet wird, wenn das Lotmaterial auf die Mantelfläche des Bolzens appliziert ist, sodass entweder die Mantelfläche des Bolzens oder die Innenseite der Hülse das Lötflussmittel aufweisend ausgebildet wird,

- Aufschieben der Hülse auf die Mantelfläche des Bolzens,
- stoffschlüssiges Verbinden von Mantelfläche und Hülse mittels eines Lötvorgangs,
- Verschließen des Längsschlitzes der Hülse, insbesondere durch Schweißen, und
- optionale Durchführung einer spanenden Bearbeitung einer, dem Bolzen abgewandten zweiten Seite des Metallblechs.

Das Verfahren ermöglicht es, die Dicke der Hülse besonders gering zu halten und die Herstellungskosten für das Bauteil zu senken.

Das ebene Metallblech wird bevorzugt vor dem Umformen zur Hülse beschichtet, aber auch eine nachträgliche Beschichtung der Innenseits der Hülse nach dem Umformen ist möglich, beispielsweise durch ein thermisches Spritzen des Lotmaterials oder ein Aufspritzen des Lötflussmittels.

Zum Aufschieben der Hülse auf den Bolzen sind diese insbesondere derart mit einem Spiel zueinander dimensioniert, dass dies ohne ein Verdrücken der Geometrie der Hülse möglich ist.

Das Metallblech aus Bronze wird dabei vorzugsweise aus einem Gleitlagerwerkstoff in Form einer Kupfer-Zink-Legierung, einer Kupfer-Zinn-Legierung, einer Kupfer-Aluminium-Legierung oder Mischungen daraus gebildet.

Das Lotmaterial wird vorzugsweise durch ein Hartlotmaterial, wie ein silberhaltiges Hartlot gebildet. Aber auch eine Verwendung von Weichloten als Lotmaterial ist möglich.

Das Lotmaterial wird bevorzugt in einer Schichtdicke im Bereich von bis zu 160 µm, insbesondere im Bereich von bis zu 80 µm, aufgebracht.

Das Lotmaterial wird in einer bevorzugten Ausführungsform des Verfahrens durch thermisches Spritzen aufgebracht. Aber auch ein Aufgießen von flüssigem Lotmaterial oder ein Siebdrucken und dergleichen sind möglich. Weiterhin ist der Einsatz einer Lotfolie möglich, die auf das geforderte Maß zugeschnitten und zum Aufbringen auf das Metallblech induktiv erwärmt wird.

Die Hülse wird während des Lötvorganges vorzugsweise allseitig gleichmäßig gegen den Bolzen gedrückt, damit eine durchgehende stoffschlüssige Verbindung zwischen der Mantelfläche des Bolzens und der Innenseite der Hülse beim Lötvorgang ausgebildet wird. Dazu kann die Hülse durch mindestens eine die Hülse umgebende Klammer am Bolzen gehalten werden. Alternativ kann die Hülse samt Bolzen zum Löten in eine Sackbohrung gesteckt werden, wobei die Wandung der Sackbohrung die Hülse zumindest bereichsweise gegen den Bolzen drückt.

Die Hülse wird während des Lötvorganges bevorzugt induktiv erhitzt, um das Lotmaterial zusammen mit dem Lotflussmittel zu verflüssigen und die stoffschlüssige Verbindung zwischen der Innenseite der Hülse und der Mantelfläche des Bolzens auszubilden. Alternativ zu einem induktiven Erhitzen kann die Erwärmung auch durch einen Infrarotstrahler oder einen gas- oder ölbefeuerten Ofen erfolgen.

Das Metallblech weist bevorzugt eine Blechdicke im Bereich von 0,1 bis 10 mm, insbesondere im Bereich von 0,5 bis 3 mm auf. Dadurch wird Hülsenmaterial eingespart und die Kosten für die Herstellung minimiert.

Das Verschließen des Längsschlitzes der Hülse erfolgt insbesondere durch ein Schweißen, insbesondere Laserschweißen.

Nach dem Schließen des Längsschlitzes der Hülse erfolgt bevorzugt eine mechanische Nachbearbeitung der zweiten Seite des Metallblechs, welche die Gleitoberfläche des Bauteils ausbildet. Sofern die Oberfläche der Hülse den Anforderungen an den Gleitkontakt bereits genügt, kann dies auch unterbleiben.

Nach einem Reinigen des Bauteils ist dieses zum Einbau in ein Gleitlager bereit.

Der Bolzen ist vorzugsweise aus Stahl, insbesondere der Sorte 42CrMoV4 oder C60, gebildet. Der Bolzen wird vorzugsweise mechanisch auf Maß bearbeitet und gewaschen, bevor ein Beschichten mit Lötflussmittel oder Lotmaterial erfolgt.

Ein Gleitlager, umfassend ein erfindungsgemäßes Bauteil, welches nach dem erfindungsgemäßen Verfahren hergestellt ist, sowie ein Planetenrad mit einer Bohrung, wobei das Bauteil zentrisch in der Bohrung aufgenommen ist, und wobei einerseits die zweite Seite des Metallblechs und andererseits das Planetenrad im Bereich der Bohrung in direktem Gleitkontakt angeordnet sind, besitzt signifikante Kostenvorteile.

Auch ein Getriebe einer Windkraftanlage, umfassend mindestens ein erfindungsgemäßes Gleitlager, weist geringe Herstellungskosten und eine hohe Laufzeit auf.

Die Figuren 1 bis 7 sollen die Erfindung beispielhaft erläutern. So zeigt
- Figur 1: eine Metallfolie und deren Umformung zu einer Hülse mit nachfolgender Beschichtung der Innenseite der Hülse,
- Figur 2: einen Bolzen und die Beschichtung seiner Mantelfläche;
- Figur 3: eine weitere Metallfolie, deren Beschichtung und Umformung zu einer Hülse;
- Figur 4: einen weiteren Bolzen und die Beschichtung seiner Mantelfläche;
- Figur 5: das Verbinden von Bolzen und Hülse zu einem Bauteil eines Gleitlagers;
- Figur 6: einen Längsschnitt durch ein Gleitlager umfassend das Bauteil und ein Planetenrad; und
- Figur 7: ein Getriebe für eine Windkraftanlage umfassend mehrere Gleitlager.

Gleiche Bezugszeichen in den Figuren kennzeichnen gleiche Bauteile.

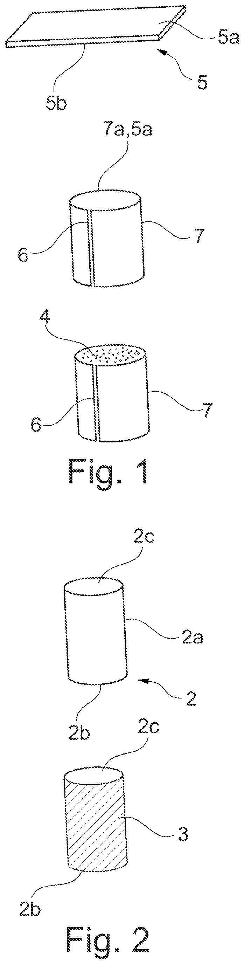

Figur 1 zeigt im oberen Bild eine Metallfolie 5 aus Bronze mit einer ersten Seite 5a und einer zweiten Seite 5b und mit einer Blechdicke von 1 mm. Gemäß dem mittleren Bild erfolgt eine Umformung der Metallfolie 5 zu einer Hülse 7 durch ein Aufrollen, wobei sich ein Längsschlitz 6 ausbildet. Die erste Seite 5a der Metallfolie bildet nun die Innenseite 7a der Hülse 7. Gemäß dem unteren Bild erfolgt nun eine Beschichtung der Innenseite 7a der Hülse 7 mit Lotmaterial 4, insbesondere durch ein thermisches Spritzen.

Figur 2 zeigt im oberen Bild einen Bolzen 2 mit einer Mantelfläche 2a und zwei Stirnseiten 2b, 2c. Der Bolzen 2 wird auf Maß bearbeitet und gereinigt. Im unteren Bild ist erkennbar, dass die Mantelfläche 2a des Bolzens 2 mit einem Lötflussmaterial 3 beschichtet wird.

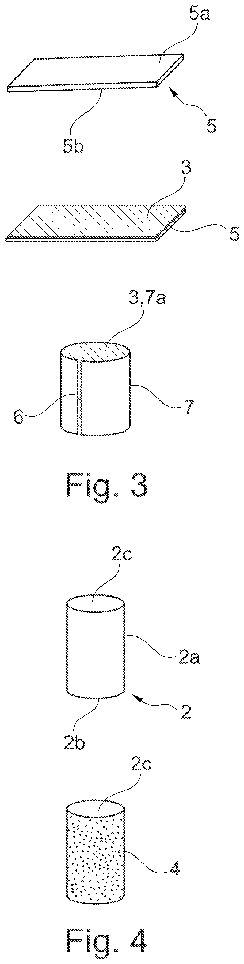

Figur 3 zeigt im oberen Bild eine weitere Metallfolie 5 aus Bronze mit einer ersten Seite 5a und einer zweiten Seite 5b und mit einer Blechdicke von 1 mm. Gemäß dem mittleren Bild erfolgt eine Beschichtung der ersten Seite 5a des Metallblechs 5 mit einem Lötflussmittel 3. Gemäß dem unteren Bild erfolgt nun eine Umformung der Metallfolie 5 samt Lötflussmittel 3 zu einer Hülse 7 durch ein Aufrollen, wobei sich ein Längsschlitz 6 ausbildet. Die erste Seite 5a der Metallfolie 5 mit der Schicht aus Lötflussmittel 3 bildet nun die Innenseite 7a der Hülse 7.

Figur 4 zeigt einen weiteren Bolzen 2 mit einer Mantelfläche 2a und zwei Stirnseiten 2b, 2c. Der Bolzen 2 wird auf Maß bearbeitet und gereinigt. Im unteren Bild ist erkennbar, dass die Mantelfläche 2a des Bolzens 2 mit einem Lotmaterial 4 beschichtet wird, insbesondere durch ein thermisches Spritzen.

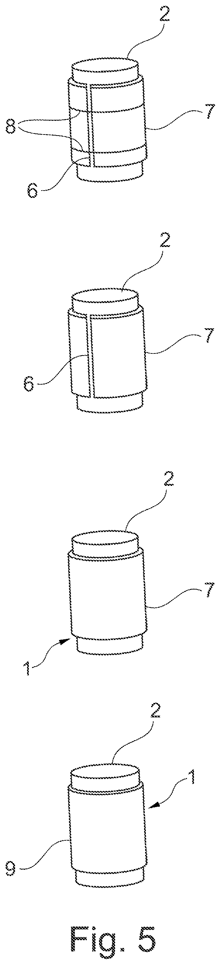

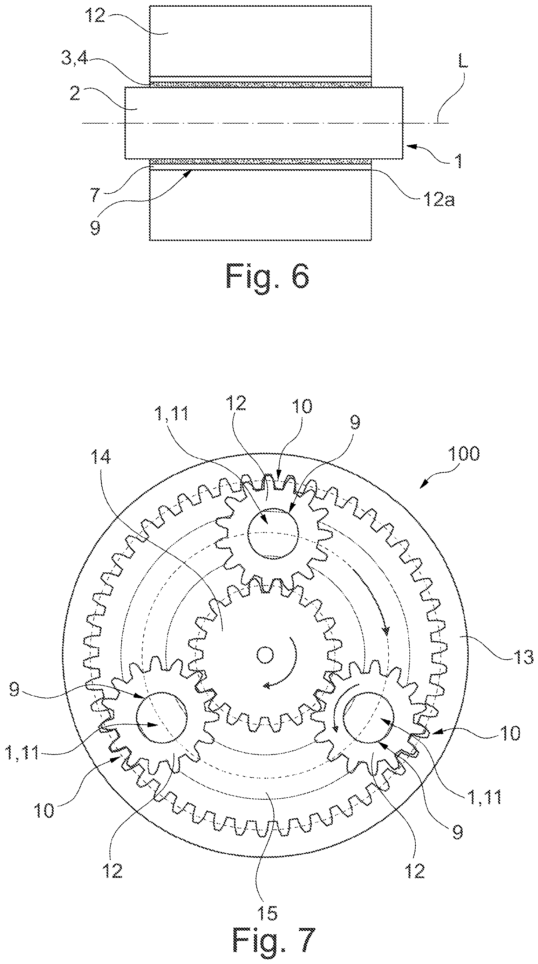

Figur 5 zeigt das Verbinden eines Bolzens 2 mit beschichteter Mantelfläche 2a gemäß Figur 2 und einer Hülse 7 gemäß Figur 1 oder eines Bolzens 2 mit beschichteter Mantelfläche 2a gemäß Figur 4 und einer Hülse 7 gemäß Figur 3 zu einem Bauteil 1 eines Gleitlagers 10 (vergleiche Figur 6). Im oberen Bild ist gezeigt, dass die Hülse 7 auf die beschichtete Mantelfläche des Bolzens 2 aufgeschoben wird und mittels Klammern 8 an den Bolzen angedrückt und in Position fixiert wird. Nun erfolgt ein Lötvorgang, bei welchem eine stoffschlüssige Verbindung zwischen dem Bolzen 2 und der Hülse 7 ausgebildet wird. Das nächste Bild zeigt dem Bolzen 2 mit der aufgelöteten Hülse 7 nach dem Lötvorgang und nach einer Abnahme der Klammern 8. Es ist ein Längsschlitz 6 im Bereich der Hülse 7 erkennbar, der nun durch Laserschweißen geschlossen wird, siehe nächstes Bild. Es erfolgt im Bedarfsfall eine mechanische Bearbeitung der Hülse 7 auf ihrer dem Bolzen 2 abgewandten Seite, die der zweiten Seite 5b der Metallfolie 5 entspricht. Die Gleitfläche 9 des Bauteils 1 kann demnach bereits nach dem Schließen des Längsschlitzes 6 oder erst einer mechanischen Bearbeitung der Hülse 7 vorliegen. Das Bauteil 1 wird vorzugsweise noch gereinigt und ist nun in einem Gleitlager 10 (vergleiche Figur 6) einsetzbar.

Figur 6 zeigt einen schematischen Längsschnitt durch ein Gleitlager 10 umfassend das Bauteil 1 und ein Planetenrad 12 mit einer Bohrung 12a, in welcher das Bauteil 1 aufgenommen ist. Zu erkennen ist der Bolzen 2, über die Lotschicht 4' stoffschlüssig verbunden mit der Hülse 7. Die Hülse 7 weist die Gleitfläche 9 auf, zu der das Planetenrad 12 im Bereich der Bohrung 12a in Gleitkontakt steht. Das Planetenrad 12 dreht sich um das Bauteil 1 konzentrisch zu dessen Längsachse L und gleitet auf der Gleitschicht 9.

Figur 7 zeigt ein Getriebe 100 für eine Windkraftanlage umfassend drei Gleitlager 10. Die Gleitlager 10 umfassen jeweils ein Bauteil 1 in Form eines Planetenradzapfens 11 und ein Planetenrad 12, wobei das Planetenrad 12 und das Bauteil 1 bzw. der Planetenradzapfen 11 in Gleitkontakt zueinander stehen. Weiterhin sind ein Hohlrad 13, ein Sonnenrad 14 und ein Planetenträger 15 erkennbar.

### Bezugszeichenliste

- 1: Bauteil
- 2: Bolzen
- 2a: Mantelfläche
- 2b, 2c: Stirnseite
- 3: Lötflussmittel
- 4: Lotmaterial
- 4': Lotschicht
- 5: Metallblech
- 5a: erste Seite
- 5b: zweite Seite
- 6: Längsschlitz
- 7: Hülse
- 7a: Innenseite
- 8: Klammer
- 9: Gleitfläche
- 10: Gleitlager
- 11: Planetenradzapfen
- 12: Planetenrad
- 12a: Bohrung
- 13: Hohlrad
- 14: Sonnenrad
- 15: Planetenträger
- 100: Getriebe
- L: Längsachse

## Patentansprüche

1. Verfahren zur Herstellung eines Bauteiles (1) eines Gleitlagers (10), umfassend folgende Schritte:
- Bereitstellen eines metallischen Bolzens (2) mit einer zylindrischen Mantelfläche (2a) und zwei Stirnflächen (2b, 2c),
- Beschichten der Mantelfläche (2a) des Bolzens (2) mit einem Lötflussmittel (3) oder einem Lotmaterial (4),
- Bereitstellen eines Metallbleches (5) aus Bronze, Umformen des Metallbleches (5) zu einer einen Längsschlitz (6) aufweisenden, zylindrischen Hülse (7), wobei eine, eine Innenseite (7a) der Hülse (7) bildende erste Seite (5a) des Metallbleches (5) vor oder nach dem Umformen mit einem Lotmaterial (4) beschichtet wird, wenn auf die Mantelfläche (2a) des Bolzens (2) das Lötflussmittel (3) aufgebracht ist, oder wobei die, eine Innenseite (7a) der Hülse (7) bildende erste Seite (5a) des Metallbleches (5) vor oder nach dem Umformen mit einem Lötflussmittel (3) beschichtet wird, wenn das Lotmaterial (4) auf die Mantelfläche (2a) des Bolzens (2) appliziert ist, sodass entweder die Mantelfläche (2a) des Bolzens (2) oder die Innenseite (7a) der Hülse (7) das Lötflussmittel (3) aufweisend ausgebildet wird,
- Aufschieben der Hülse (7) auf die Mantelfläche (2a) des Bolzens (2),
- stoffschlüssiges Verbinden von Mantelfläche (2a) und Hülse (7) mittels eines Lötvorgangs,
- Verschließen des Längsschlitzes (6) der Hülse (7), insbesondere durch ein Schweißen, und
- optionale Durchführung einer spanenden Bearbeitung einer, dem Bolzen (2) abgewandten zweiten Seite (5b) des Metallblechs (5).

2. Verfahren nach Anspruch 1, wobei das Lotmaterial (4) durch ein Hartlotmaterial gebildet wird.

3. Verfahren nach einem der Ansprüche 1 oder 2, wobei das Lotmaterial (4) in einer Schichtdicke im Bereich von bis zu 160 µm aufgebracht wird.

4. Verfahren nach einem der Ansprüche 1 bis 3, wobei das Lotmaterial (4) durch thermisches Spritzen aufgebracht wird.

5. Verfahren nach einem der Ansprüche 1 bis 4, wobei die Hülse (7) während des Lötvorganges gegen den Bolzen (2) gedrückt wird.

6. Verfahren nach einem der Ansprüche 1 bis 5, wobei die Hülse (7) während des Lötvorganges induktiv erhitzt wird.

7. Verfahren nach einem der Ansprüche 1 bis 6, wobei das Metallblech (5) eine Blechdicke im Bereich von 0,1 bis 10 mm aufweist.

8. Gleitlager (10), umfassend ein Bauteil (1), hergestellt nach einem Verfahren gemäß einem der Ansprüche 1 bis 7, sowie ein Planetenrad (12) mit einer Bohrung (12a), wobei das Bauteil (1) zentrisch in der Bohrung (12a) aufgenommen ist, und wobei einerseits die zweite Seite (5a) des Metallblechs (5) und andererseits das Planetenrad (12) im Bereich der Bohrung (12a) in direktem Gleitkontakt angeordnet sind.

9. Getriebe (100) einer Windkraftanlage, umfassend mindestens ein Gleitlager (10) nach Anspruch 8.

## Claims

1. A method for producing a component (1) of a sliding bearing (10), comprising the following steps:
- providing a metal bolt (2) with a cylindrical lateral surface (2a) and two end faces (2b, 2c),
- coating the lateral surface (2a) of the bolt (2) with a soldering flux (3) or a solder material (4),
- providing a metal sheet (5) made of bronze, forming the metal sheet (5) into a cylindrical sleeve (7) having a longitudinal slot (6), wherein a first side (5a) of the metal sheet (5) forming an inner side (7a) of the sleeve (7) is coated with a solder material (4), before or after forming, when the soldering flux (3) is applied to the lateral surface (2a) of the bolt (2), or wherein the first side (5a) of the metal sheet (5) forming an inner side (7a) of the sleeve (7) is coated with a soldering flux (3), before or after forming, when the solder material (4) is applied to the lateral surface (2a) of the bolt (2), so that either the lateral surface (2a) of the bolt (2) or the inner side (7a) of the sleeve (7) is formed to have the soldering flux (3),
- sliding the sleeve (7) onto the lateral surface (2a) of the bolt (2),
- integrally bonding the lateral surface (2a) and the sleeve (7) by means of a soldering process,
- closing the longitudinal slot (6) of the sleeve (7), in particular by welding, and
- optionally machining a second side (5b) of the metal sheet (5) facing away from the bolt (2).

2. The method according to claim 1, wherein the solder material (4) is formed by a brazing material.

3. The method according to any one of claims 1 or 2, wherein the solder material (4) is applied in a layer thickness in the range of up to 160 µm.

4. The method according to any one of claims 1 to 3, wherein the solder material (4) is applied by thermal spraying.

5. The method according to any one of claims 1 to 4, wherein the sleeve (7) is pressed against the bolt (2) during the soldering process.

6. The method according to any one of claims 1 to 5, wherein the sleeve (7) is heated inductively during the soldering process.

7. The method according to any one of claims 1 to 6, wherein the metal sheet (5) has a sheet thickness in the range of 0.1 to 10 mm.

8. A sliding bearing (10), comprising a component (1), produced according to a method according to any one of claims 1 to 7, and a planetary gear (12) with a bore (12a), wherein the component (1) is centrally accommodated in the bore (12a), and wherein on the one hand the second side (5a) of the metal sheet (5) and on the other hand the planetary gear (12) are arranged in direct sliding contact in the region of the bore (12a).

9. A transmission (100) of a wind turbine, comprising at least one sliding bearing (10) according to claim 8.

## Revendications

1. Procédé de production d'un élément (1) d'un palier lisse (10) comprenant les étapes suivantes :
- fourniture d'un boulon métallique (2) avec une surface latérale cylindrique (2a) et deux faces d'extrémité (2b, 2c),
- revêtement de la surface latérale (2a) du boulon (2) avec un flux de brasage (3) ou un matériau de brasage (4),
- fourniture d'une tôle (5) en bronze, formage de la tôle (5) en un manchon cylindrique (7) présentant une fente longitudinale (6), un premier côté (5a) de la tôle (5) formant un côté intérieur (7a) du manchon (7) étant revêtu d'un matériau de brasage (4) avant ou après formage, lorsque le flux de brasage (3) est appliqué sur la surface latérale (2a) du boulon (2), ou le premier côté (5a) de la tôle (5) formant un côté intérieur (7a) du manchon (7) étant revêtu d'un flux de brasage (3) avant ou après formage lorsque le matériau de brasage (4) est appliqué sur la surface latérale (2a) du boulon (2), de sorte que soit la surface latérale (2a) du boulon (2), soit le côté intérieur (7a) du manchon (7) est conçu(e) de manière à présenter le flux de brasage (3),
- glissement du manchon (7) sur la surface latérale (2a) du boulon (2),
- liaison par adhérence de la surface latérale (2a) et du manchon (7) au moyen d'un processus de brasage,
- fermeture de la fente longitudinale (6) du manchon (7), notamment par un soudage, et
- réalisation facultative d'un usinage par enlèvement de copeaux d'un deuxième côté (5b) de la tôle (5) opposé au boulon (2).

2. Procédé selon la revendication 1, dans lequel le matériau de brasage (4) est formé par un matériau de brasage dur.

3. Procédé selon l'une des revendications 1 ou 2, dans lequel le matériau de brasage (4) est appliqué en une épaisseur de couche dans la plage allant jusqu'à 160 µm.

4. Procédé selon l'une des revendications 1 à 3, dans lequel le matériau de brasage (4) est appliqué par projection thermique.

5. Procédé selon l'une des revendications 1 à 4, dans lequel le manchon (7) est pressé contre le boulon (2) pendant le processus de brasage.

6. Procédé selon l'une des revendications 1 à 5, dans lequel le manchon (7) est chauffé par induction pendant le processus de brasage.

7. Procédé selon l'une des revendications 1 à 6, dans lequel la tôle (5) présente une épaisseur de tôle dans la plage de 0,1 à 10 mm.

8. Palier lisse (10) comprenant un élément (1) produit selon un procédé selon l'une des revendications 1 à 7, et un engrenage planétaire (12) avec un alésage (12a), l'élément (1) étant reçu au centre dans l'alésage (12a), et d'une part le deuxième côté (5a) de la tôle (5) et d'autre part l'engrenage planétaire (12) étant disposés en contact glissant direct dans la zone de l'alésage (12a).

9. Transmission (100) d'une éolienne, comprenant au moins un palier lisse (10) selon la revendication 8.
